**Europäisches Patentamt**

**European Patent Office**

**Office européen des brevets**

(11) Numéro de publication : **0 453 782 B1**

# FASCICULE DE BREVET EUROPEEN

(45) Date de publication du fascicule du brevet :
**12.01.94 Bulletin 94/02**

(51) Int. Cl.$^5$ : **A23J 1/20**

(21) Numéro de dépôt : **91104639.9**

(22) Date de dépôt : **25.03.91**

(54) **Procédé de production de kappa-caseino-glycomacropeptide.**

(30) Priorité : **27.04.90 CH 1448/90**

(43) Date de publication de la demande :
**30.10.91 Bulletin 91/44**

(45) Mention de la délivrance du brevet :
**12.01.94 Bulletin 94/02**

(84) Etats contractants désignés :
**DE DK ES FR GB NL**

(56) Documents cités :
**EP-A- 0 291 264**
**FR-A- 2 288 477**

(73) Titulaire : **SOCIETE DES PRODUITS NESTLE S.A.**
**Case postale 353**
**CH-1800 Vevey (CH)**

(72) Inventeur : **Berrocal, Rafael**
**3, ch. Malavernaz**
**CH-1806 St-Legier (CH)**
Inventeur : **Neeser, Jean-Richard**
**Rue du Temple 34**
**CH-1010 Lausanne (CH)**

## Description

L'invention a trait à un procédé de production de Kappa-caséino-glycomacropeptide (ci-après CGMP).

Le CGMP est un macropeptide sialylé qui est formé par l'action de la présure ou de la pepsine sur la kappa-caséine du lait de mammifères.

On connaît un procédé de fabrication de CGMP au niveau du laboratoire consistant à traiter une matière première d'origine lactique, telle que par exemple une caséine acide ou un caséinate hydrolysé par la présure ou encore un lactosérum doux déminéralisé et délactosé, par l'acide trichloracétique de manière à précipiter les protéines, puis à recueillir le surnageant, à le dialyser et enfin à sécher le dialysat. Un tel procédé n'est pas industriel.

Selon EP.A.291.264, on peut préparer industriellement le CGMP par hydrolyse de caséine acide ou de caséinate de sodium ou de calcium par la présure, conduisant à la coagulation de la para-kappa-caséine. Le surnageant est alors acidifié à pH 4-5 pour précipiter le phospho-caséinate de calcium. Après séparation du précipité, la solution est neutralisée, puis déminéralisée par osmose inverse et enfin concentrée et séchée.

Selon FR.A. 2.288.477, on peut produire industriellement les glycoprotéines et l'acide sialique à partir de lactosérum de fromagerie par floculation des protéines du lactosérum, récupération du surnageant puis ultrafiltration du surnageant avec des membranes à seuil de coupure de 15'000 dalton environ produisant un rétentat contenant les sialo-glycoprotéines à partir duquel on obtient l'acide sialique par hydrolyse à l'acide sulfurique, neutralisation à l'hydroxyde de baryum, séparation du précipité de sulfate de baryum, puis isolement des acides sialiques du surnageant par échange d'ions.

Les procédés industriels ci-dessus ne permettent pas l'obtention de CGMP de pureté souhaitable pour l'application comme agent anti-infectieux c'est-à-dire contenant peu de protéines, de lactose et de minéraux résiduels et l'essentiel des acides sialiques.

Le but de l'invention est la production industrielle de CGMP ayant les qualités indiquées précédemment.

L'invention concerne donc un procédé de production de kappa-caséino-glycomacropeptide dans lequel on flocule les protéines d'un produit lactosérique concentré en protéines partiellement délactosé, ce qui conduit à un précipité et à un premier surnageant, on recueille le premier surnageant puis on le concentre par ultrafiltration, conduisant à un rétentat.

Le procédé selon l'invention est caractérisé par le fait que l'on traite le rétentat par l'éthanol, ce qui produit un précipité et un second surnageant, on recueille le second surnageant et on le sèche.

Pour mettre en oeuvre le procédé, on peut partir d'un produit lactosérique, par exemple de lactosérum doux obtenu après séparation de la caséine coagulée par la présure, concentré et partiellement délactosé. On peut également utiliser un tel concentrat de lactosérum, déminéralisé par exemple par électrodialyse, et/ou échange d'ions et/ou osmose inverse. On peut de préférence mettre en oeuvre un concentrat de protéines de lactosérum doux fortement délactosé obtenu par ultrafiltration, puis diafiltration (ultrafiltration avec lavage). Ces matières premières peuvent se présenter à l'état liquide ou sous forme de poudre, auquel cas on les met en dispersion dans l'eau, de préférence déminéralisée, en vue de leur traitement ultérieur. Bien entendu, ces matières premières peuvent provenir de lait de ruminant tel que vache, chèvre, brebis ou bufflesse.

La floculation des protéines de lactosérum nécessite leur dénaturation poussée (supérieure à 90%). Elle est réalisée par un traitement thermique à 80-100°C pendant 10-30 min, la température la plus basse correspondant à la durée la plus longue et vice-versa, par exemple à 90°C pendant 20 min.

Le pH lors du traitement thermique est 4-7, de préférence environ 6.

De préférence, on ajoute du CaCl$_2$ à pH environ 6 en quantité telle que la concentration en ions calcium libres soit supérieure à 5 mM, pour favoriser l'aggrégation des protéines sériques et leur insolubilisation au cours du traitement thermique.

Après floculation, il se forme un gel que l'on dilue de préférence avec de l'eau déminéralisée. On refroidit alors la suspension obtenue et on ajuste son pH à environ 4,5 par acidification avec une solution aqueuse d'un acide, organique ou minéral, par exemple l'acide chlorhydrique. Il se forme un précipité des protéines dénaturées que l'on peut séparer du surnageant par tout moyen de séparation approprié, par exemple par filtration ou centrifugation.

On procède ensuite à l'ultrafiltration du surnageant par passage sur des membranes dont le pouvoir de coupure nominal est 5'000 - 20'000 dalton.

Les membranes susceptibles d'être mises en oeuvre peuvent être organiques ou minérales. L'ultrafiltration a lieu de préférence jusqu'à concentrer environ la moitié du volume initial puis on procède à une diafiltration, c'est-à-dire à l'addition d'eau, de préférence déminéralisée, à volume constant, c'est-à-dire que l'on ajuste le débit de l'eau entrant dans le module au débit du perméat sortant. Le but de l'ultrafiltration et de la diafiltration est de diminuer la teneur en minéraux du rétentat.

A partir du rétentat, on extrait le CGMP par addition d'éthanol de préférence absolu. Cette étape essentielle

2

permet un enrichissement sélectif de la solution en CGMP en précipitant la presque totalité des protéines solubles résiduelles. La quantité ajoutée dépend de la concentration en protéines de la solution. Une quantité trop faible ne conduit qu'à une précipitation partielle des protéines et par suite influence négativement la pureté du CGMP. Par ailleurs une addition trop importante d'éthanol risque d'entraîner la précipitation de composés azotés non protéiques tels que le CGMP au détriment du rendement. Une addition de 5 à 25% d'alcool, par rapport au volume de la solution donne des résultats satisfaisants. Le pH de la solution doit être de 4-5, et de préférence ajusté à 4,5 pour conduire à une précipitation optimale des protéines. On ajuste celui-ci par addition d'une solution aqueuse d'un acide organique ou minéral, de préférence d'acide chlorhydrique.

Après filtration puis concentration par exemple par évaporation, on sèche le concentrat par exemple par pulvérisation ou lyophilisation.

Le cas échéant, on peut préparer le CGMP désialylé par hydrolyse enzymatique ou de préférence acide à partir du CGMP précédent.

Les exemples ci-après illustrent l'invention. Dans ceux-ci les pourcentages et parties sont pondéraux sauf indication contraire.

L'azote total (NT) est déterminé par la méthode de Kjeldahl ainsi que l'azote non protéique (NPN) après précipitation des protéines à l'acide trichloracétique (TCA). Les protéines sont obtenues comme (NT-NPN)x6,38. Dans la préparation classique du CGMP à l'échelle du laboratoire, par précipitation des protéines sériques par le TCA, on purifie le surnageant par dialyse, puis chromatographie sur un gel de Sephadex[R]. Les fractions contenant les acides sialiques définissent un pic homogène et leur récolte conduit au CGMP pur qui contient 13% d'acides sialiques en moyenne, dans le cas d'un CGMP d'origine bovine.

On peut donc calculer la pureté des différents CGMP sur la base de leur teneur en acides sialiques obtenue comme indiqué précédemment, exprimée en % par rapport au CGMP bovin pur. Afin de vérifier que ces pourcentages de pureté correspondent bien à la réalité, on procède à l'isolement du CGMP pur pour chaque préparation par la méthode classique.

Dans chaque cas, la récolte des fractions sialylées donne accès à un produit qui, une fois lyophilisé, contient plus de 10% d'acides sialiques (exemple comparatif, tableau dernière ligne ci-après). Pour déterminer la teneur en lactose résiduel, on procède à la chromatographie sur gel de Sephadex G-50[R] avec élution avec une solution aqueuse d'acide acétique à 100 mM.

Exemple 1

On disperse 20 kg de concentrat de protéines de lactosérum bovin (WPC) dans 180 kg d'eau déminéralisée. Le concentrat a la composition ci-après:

|  | % |
|---|---|
| Protéines | 73 |
| Lactose | 7,8 |
| Minéraux | 2,8 |
| Lipides | 6 |
| CGMP | 5,4 |
| Eau | complément à 100 |

On ajoute 300 g de $CaCl_2.2H_2O$ à la dispersion et on ajuste son pH à 6 avec une solution aqueuse d'HCl à 18%. On transfère la dispersion dans une cuve à double manteau munie de moyens d'agitation préalablement chauffée à 90°C et on la maintient à cette température sous légère agitation pendant 20 min. Il se forme un gel que l'on dilue avec 40 kg d'eau déminéralisée. Après refroidissement à 25°C, acidification à pH 4,5 par addition d'une solution aqueuse d'HCl, on pompe la dispersion dans une centrifugeuse tournant à 9'000 t/min. On recueille un premier surnageant contenant 3,5% de matières sèches et un culot. On disperse ensuite le culot dans 20 kg d'eau acidifiée à pH 4,5 par une solution aqueuse d'HCl à 18%, puis on centrifuge celle-ci à 9'000 t/min, ce qui donne un second surnageant contenant 5,1% de matières sèches. Après mélange des deux surnageants, on ultrafiltre le mélange jusqu'à la moitié de son volume à une température constante de 35°C, au moyen d'un module de 4 m² de surface de membranes d'une coupure nominale de 20'000 dalton, muni d'une cuve pour la recirculation du rétentat à une pression d'entrée de 7 bar et avec un débit de perméation constant de 120 1/h en 75 min.

Le perméat sortant a une teneur en matières sèches de 0,5% et contient des acides sialiques représentant 2% de celle du mélange entrant dans l'appareil. Par la suite, on introduit 125 kg d'eau déminéralisée dans l'appareil en compensant progressivement le perméat évacué de manière à travailler à volume constant. Après ce lavage, on termine l'ultrafiltration de manière à réduire le volume de rétentat dans la cuve de recirculation à 23 l, soit 29 kg contenant 16,5% de matières sèches. On chasse le liquide contenu dans le volume mort du module, puis on rince le module à l'eau déminéralisée. Ce liquide et les eaux de rinçage représentent 19 kg de rétentat additionnel contenant 7,9% de matières sèches.

Le rétentat total correspond à 48 kg de 13,2% de matières sèches. Après dilution du rétentat à 100 kg avec de l'eau déminéralisée, addition de 16,5 l d'éthanol absolu et ajustement du pH à 4,5 avec une solution aqueuse d'HCl, on maintient le mélange sous faible agitation pendant 30 min. Il se forme un précipité que l'on filtre. On obtient 110 l de filtrat que l'on concentre à 28 l dans un évaporateur, puis que l'on sèche par lyophilisation. Les 290 g de CGMP obtenus contiennent 10,9% d'acides sialiques totaux et 8,4 % de protéines.

Résultats comparatifs

A titre de comparaison, on prépare le CGMP:

I. En suivant l'enseignement de EP.A. 291.264

II. D'une manière analogue à celle décrite dans FR.A.2.288.477 mais sans hydrolyse des acides sialiques, à savoir en procédant comme dans l'exemple 1 mais sans faire intervenir la précipitation des protéines sériques résiduelles à l'éthanol.

III. Par précipitation des protéines sériques à l'acide trichloracétique à partir du concentrat de protéines de lactosérum servant de matière première dans l'exemple 1, puis purification sur une colonne de gel Sephadex G50[R], (TCA/G-50).

Les résultats d'analyse des produits obtenus sont indiqués dans le tableau ci-après:

| Composition (%) | CGMP | | | Selon l'exemple 1 | WPC de départ |
| --- | --- | --- | --- | --- | --- |
| | I | II | III | | |
| Azote total | -- | 12,1 | 10,09 | 10,08 | 12,25 |
| Azote non protéique | -- | 1,46 | 10,09 | 8,76 | 0,81 |
| Protéines | -- | 67,6 | 0 | 8,4 | 73 |
| Acides sialiques TCA-solubles | 5,2 | 1,9 | 13 | 10,9 | 0,7 |
| Lactose | -- | 1,3 | 0 | 3,3 | 7,8 |
| Minéraux | 11 | 2 | -- | 2 | 2,8 |
| Pureté du CGMP | 40 | 15 | 100 | 84 | 5 |
| Composition en acides sialiques d'un échantillon purifié par TCA/G-50 (méthode classique du laboratoire) | -- | 13,4 | 13 | 11,8 | 12,8 |

<u>Légende:</u> --: non déterminé.

Les résultats précédents montrent que le CGMP préparé selon l'invention est caractérisé par une teneur en minéraux < à 5%, une teneur en protéines < à 10%, une teneur en acides sialiques > 10% et une pureté de 84%. Par contre les produits issus des procédés industriels conduisent à une pureté de 40% (I), voire de 15% (II).

Exemple 2

Les acides sialiques portés par le CGMP sont toujours liés au disaccharide qui forme la partie interne de ses chaînes glycanniques, à savoir la séquence $Gal\beta1 \rightarrow 3\ GalNAc\alpha1 \rightarrow Ser/Thr$.
Une désialylation du CGMP permet donc de passer d'un produit exposant des acides sialiques, et dans lequel la majeure partie des résidus de galactose sont masqués, à un produit exposant des $\beta$-galactosides terminaux, donc doué de propriétés différentes.
Pour accéder au CGMP désialylé, on dissout le CGMP de l'exemple 1, à 5% en poids/volume dans une solution aqueuse à 25 mM d'$H_2SO_4$. Après ajustement du pH à 2 par addition d'une solution aqueuse d'$H_2SO_4$, on chauffe la solution à 80°C et on la maintient 2h à cette température sous faible agitation. Après dialyse poussée de la solution contre l'eau pure au moyen d'une membrane à pouvoir de coupure 6'000-8'000 dalton, on sèche le produit par lyophilisation. Ses caractéristiques sont les suivantes:

| Acides sialiques | < 1% |
| Galactose | 5% |
| N-Acétylgalactosamine | 6,2% |

Les monosaccharides sont identifiés et dosés par chromatographie gazeuse après hydrolyse et dérivatisation.

## Revendications

1. Procédé de production de kappa-caséino-glycomacropeptide dans lequel on flocule les protéines d'un produit lactosérique concentré en protéines partiellement délactosé, ce qui conduit à un précipité et à un premier surnageant, on recueille le premier surnageant puis on l'ultrafiltre, conduisant à un rétentat, caractérisé par le fait que l'on traite le rétentat par l'éthanol, ce qui produit un précipité et un second surnageant, on recueille le second surnageant et on le sèche.

2. Procédé selon la revendication 1, caractérisé par le fait que l'on ajoute l'éthanol à raison de 5 à 25% d'éthanol par rapport au volume du rétentat.

3. Procédé selon la revendication 1, caractérisé par le fait qu'après addition de l'éthanol, on ajuste le pH du milieu à 4-5 par addition d'une solution aqueuse d'un acide.

4. Procédé selon la revendication 1, caractérisé par le fait que l'on flocule les protéines de lactosérum en traitant thermiquement le produit lactosérique à 80-100°C pendant 10-30 min à pH 4-7.

5. Procédé selon la revendication 1, caractérisé par le fait que l'on flocule les protéines de lactosérum en présence d'ions calcium.

6. Procédé selon la revendication 1, caractérisé par le fait qu'après floculation des protéines de lactosérum, on refroidit la suspension obtenue et on ajuste son pH à environ 4,5 par addition d'un acide.

7. Procédé selon la revendication 1, caractérisé par le fait que l'on ultrafiltre le premier surnageant sur des membranes dont le pouvoir de coupure nominal est 5'000 à 20'000 dalton jusqu'à environ la moitié du volume mis en oeuvre, puis le diafiltre de manière à diminuer sa teneur en minéraux.

8. Procédé selon la revendication 1, caractérisé par le fait que l'on désialyle le second surnageant séché, puis redissout par hydrolyse enzymatique ou acide.

9. Kappa-caséino-glycomacropeptide, le cas échéant désialylé susceptible d'être obtenu par la mise en oeuvre du procédé selon l'une des revendications 1 à 8.

## Patentansprüche

1. Verfahren zur Herstellung von κ-Casein-Glykomakropeptid, bei welchem die Proteine eines mit Proteinen angereicherten, teilweise von Milchzucker befreiten Molkeprodukts ausgeflockt werden, was zu einem Niederschlag und zu einem ersten Überstand führt, der erste Überstand gewonnen und dann ultrafiltriert wird, was zu einem Retentat führt, dadurch gekennzeichnet, daß das Retentat mit Ethanol behandelt wird, was einen Niederschlag und einen zweiten Überstand erzeugt, der zweite Überstand gewonnen und getrocknet wird.

2. Verfahren nach Anspruch 1, dadurch gekennzeichnet, daß das Ethanol in einer Menge von 5 bis 25 %, bezogen auf das Volumen des Retentats, beigegeben wird.

3. Verfahren nach Anspruch 1, dadurch gekennzeichnet, daß der pH-Wert des Mediums nach Beigabe des Ethanols durch Beigabe einer wässrigen Lösung einer Säure auf 4-5 eingestellt wird.

4. Verfahren nach Anspruch 1, dadurch gekennzeichnet, daß die Molkeproteine durch Wärmebehandlung des Molkeprodukts mit 80 bis 100°C bei pH 4-7 während 10 bis 30 min ausgeflockt werden.

5. Verfahren nach Anspruch 1, dadurch gekennzeichnet, daß die Molkeproteine unter Anwesenheit von Calciumionen ausgeflockt werden.

6. Verfahren nach Anspruch 1, dadurch gekennzeichnet, daß nach Ausflockung der Molkeproteine die erhaltene Suspension gekühlt wird und ihr pH durch Beigabe einer Säure auf etwa 4,5 eingestellt wird.

7. Verfahren nach Anspruch 1, dadurch gekennzeichnet, daß der erste Überstand auf Membranen, deren Nennschnittbereich 5'000 bis 20'000 Dalton beträgt, bis auf etwa die Hälfte des eingesetzten Volumens ultrafiltriert wird und dann diafiltriert wird, um seinen Gehalt an Mineralien zu verringern.

8. Verfahren nach Anspruch 1, dadurch gekennzeichnet, daß der getrocknete zweite Überstand desialyliert und dann durch Enzym- oder Säurehydrolyse wieder gelöst wird.

9. Ggf. desialyliertes κ-Casein-Glykomakropeptid, das durch Verwendung des Verfahrens nach einem der Ansprüche 1 bis 8 hergestellt werden kann.

**Claims**

1. A process for the production of kappa-caseino-glyco-macropeptide in which the proteins of a whey product concentrated with proteins partly freed from lactose are flocculated, resulting in a precipitate and a first supernatant, and the first supernatant is concentrated by ultra-filtration, leading to a retentate, characterized in that the retentate is treated with ethanol, which produces a precipitate and a second supernatant, the second supernatant is collected and is then dried.

2. A process as claimed in claim 1, characterized in that the ethanol is added in a quantity of 5 to 25%, based on the volume of the retentate.

3. A process as claimed in claim 1, characterized in that, after addition of the ethanol, the pH of the medium is adjusted to 4 - 5 by addition of an aqueous solution of an acid.

4. A process as claimed in claim 1, characterized in that the whey proteins are flocculated by heat treatment of the whey product for 10 - 30 minutes at 80 - 100°C/pH 4 - 7.

5. A process as claimed in claim 1, characterized in that the whey proteins are flocculated in the presence of calcium ions.

6. A process as claimed in claim 1, characterized in that after flocculation of the whey proteins, the suspension obtained is cooled and its pH is adjusted to approximately 4.5 by addition of an acid.

7. A process as claimed in claim 1, characterized in that the first supernatant is ultrafiltered on membranes having a nominal cutoff power of 5,000 to 20,000 dalton to approximately half the volume used and is then diafiltered to reduce its content of minerals.

8. A process as claimed in claim 1, characterized in that the second supernatant, dried and then redissolved, is desialylated by enzymatic or acidic hydrolysis.

9. Kappa-caseino-glycomacropeptide, optionally desialylated, obtainable by the process claimed in any of claims 1 to 8.